# EUROPÄISCHE PATENTSCHRIFT

(11) **EP 1 022 219 B1**
(45) Veröffentlichungstag und Bekanntmachung des Hinweises auf die Patenterteilung: **18.01.2006**
(21) Anmeldenummer: 99125594.4
(22) Anmeldetag: 22.12.1999
(51) Int. Cl.: B64G 1/22, B64G 1/12, B64G 1/64

(54) **Nutzlastträger für Raumstationen**
Payload carrier for space stations
Support de charge utile pour stations spatiales

(30) Priorität: 21.01.1999 DE 19902230
(43) Veröffentlichungstag der Anmeldung: 26.07.2000
(73) Patentinhaber: EADS Space Transportation GmbH, 28199 Bremen (DE)
(72) Erfinder: Bank, Christian, Dipl.-Ing., 28237 Bremen (DE)
(74) Vertreter: Hansmann, Dierk

(56) Entgegenhaltungen:
- US-A- 4 395 004
- US-A- 5 848 766
- HASEGAWA HIDEO : "THE JAPANESE EXPERIMENT MODULE " EASCON RECORD, IEEE ELECTRONICS AND AEROSPACE SYSTEMS CONVENTION, 1986, Seiten 134-140, XP002151371
- MARTIN C H, HEMPSELL C M: "The use of pallets in the Space Station Infrastructure" JOURNAL OF THE BRITISH INTERPLANETARY SOCIETY, Bd. 43, Nr. 10, Oktober 1990 (1990-10), Seiten 426-430, XP000159630 London, UK
- MCGRATH A, PETERS G: "Use of pallet-type structures in Shuttle-attached and free-flying modes" ACTA ASTRONAUTICA, Bd. 7, Nr. 11, November 1980 (1980-11), Seiten 1239-1258, XP000956304
- HASKELL G P, OLTHOFF H: "Attached Payloads on Space Station Freedom and Columbus" PROCEEDINGS OF AN ESA WORKSHOP ON SOLAR PHYSICS AND ASTROPHYSICS AT INTERFEROMETRIC RESOLUTION, Mai 1992 (1992-05), Seiten 167-169, XP000957609 Paris, F

## Beschreibung

Die Erfindung betrifft einen Nutzlastträger für Raumstationen nach dem Oberbegriff von Anspruch 1.

Module dieser Art sind in Form großer, druckbeaufschlagter Strukturen, d.h. mit Luft gefüllter druckdichter Behälter, in denen eine Vielzahl einzelner Experimentiereinrichtungen und Geräte installiert sind, bereits seit längerem im Einsatz. Hauptfunktion derartiger Behälter, wie sie unter anderem in der US 5 791 600 A sowie der US 5 806 799 A beschrieben sind, ist die Bereitstellung eines mit atembarer Luft gefüllten Arbeitsraumes, in dem Astronauten arbeiten und die darin installierten Geräte bedienen und Experimente durchführen können. In diesem Zusammenhang ist aus der US 5 791 600 A ein sogenanntes Docking Modul bekannt geworden, das mehrere Andockstellen aufweist und mit dessen Hilfe mehrere derartige Nutzlastmodule zu einer gemeinsamen Anordnung zusammengeschlossen werden können.

Neben diesen internen, d.h. im Inneren des druckbeaufschlagten Bereiches der Raumstation angeordneten Nutzlasten bieten die im Bau befindliche internationale Raumstation ISS und Raumtransporter wie das US Space-Shuttle diverse Möglichkeiten sowohl für den Transport als auch für den Betrieb externer Nutzlasten. Dabei wird funktionell unterschieden zwischen Transportgestellen und Tragstrukturen für den Transport von der Erde in den Orbit, beispielsweise an Bord des Space-Shuttles, Montageplattformen zum Betrieb im Weltraum und Versorgungsnahtstellen für elektrische Energie sowie für die Datenübertragung.

Für jede der vorgenannten Funktionen gibt es unterschiedliche, getrennte Ansätze sowohl bezüglich ihrer Standardisierung als auch hinsichtlich ihrer wiederverwendbarkeit. Dadurch sind diese Lösungen jeweils missionsspezifisch ausgelegt und zwangsläufig relativ kostenintensiv. So existieren diverse Transportgerüste für die Beförderung von Nutzlasten an Bord von Raumtransportern, in erster Linie des US Space-Shuttles, in Form von Paletten, Brücken und Plattformen. Diese Strukturen sind ausschließlich für diesen Transport von der Erde in den Orbit konzipiert und erlauben in der Regel keinen Betrieb der auf ihnen montierten Nutzlasten außerhalb der Ladebucht des Raumtransporters.

Insbesondere im Hinblick auf die in Bau befindliche internationale Raumstation ISS wurde für externe Nutzlasten eine Standard-Versorgungsnahtstelle, die sogenannte Modified EDO Plate (MEP), entwickelt. Diese Versorgungsnahtstelle, die beispielsweise in der Zeitschrift "Der Spiegel" Nr. 47, 1998, Seite 226 dargestellt ist, wird voraussichtlich nicht nur im amerikanischen, sondern auch im europäischen und gegebenenfalls auf im russischen Teil der internationalen Raumstation ISS benutzt werden. Sie kann, unabhängig von der Tragkraft der Struktur und deren versorgungskapazität bezüglich Strom und Datenübertragung, maximal jeweils zwei getrennte Nutzlasten aufnehmen und schränkt damit die Zahl der zur Verfügung stehenden Akkommodationsmöglichkeiten stark ein.

In dem Aufsatz Hasegawa Hideo: "The Japanese Experiment Module" Eascon Record, IEEE Electronics and Aerospace Systems Convention, 1986, Seiten 134-140, XP002151371 ist eine Ausbildung dargestellt, wobei an einer Raumstation auf seinen Außenflächen verschiedenartige Nutzlast-Kopplungselemente angebracht sind. Hierbei besteht der Mangel, daß jedes individuelle Kopplungselement nur einmal besetzbar ist.

Aufgabe der Erfindung ist es, die Zahl der möglichen Aufnahmestellen für externe Nutzlasten nachhaltig zu vergrößern, ohne dadurch die Komplexität und die Kosten des gesamten Systems wesentlich zu erhöhen.

Diese Aufgabe wird erfindungsgemäß durch die Merkmale des Anspruches 1 gelöst.

Die am Anschlußpunkt abgegriffenen Versorgungsleitungen für Energie, Daten usw. werden bei der bevorzugten Ausführungsform des erfindungsgemäßen Nutzlastträgers über einen internen Kabelbaum sowohl im Inneren der Gitterstruktur zur Verfügung gestellt als auch zu der bzw. den Nahtstellen für den Anschluß weiterer derartiger Nutzlastträger geleitet. Auf diese Weise können ohne großen konstruktiven Aufwand beispielsweise bis zu fünf externe und eine interne Anschlußmöglichkeit für aktive und passive Nutzlasten zur Verfügung gestellt werden.

Die wesentlichen Vorteile des Nutzlastträgers nach der Erfindung liegen in der Bereitstellung weiterer standardisierter externer Nahtstelle für die Aufnahme zusätzlicher Nutzlasten, wobei zugleich die Möglichkeit einer einfachen Montage und Verifikation gegeben ist. Außerdem sind flexible Montagemöglichkeiten für interne und externe, für aktive ebenso wie für passive Nutzlasten gegeben; so daß die Erfindung für eine Vielzahl von Nutzlasttypen verwendbar ist. Sie kann je nach Bedarf der montierten Nutzlasten mit Zusatzgeräten ausgestattet werden, wodurch die Vorbereitungskosten für eine Mission erheblich gesenkt werden können.

Die Nutzlasten sind dabei einfach auf dem Nutzlastträger nach der Erfindung zu montieren und können bereits am Boden getestet werden, so daß bei mehreren voneinander unabhängigen Nutzlasten eine hohe Zuverlässigkeit gegeben ist und nur geringe Vorbereitungskosten anfallen. Der Nutzlastträger nach der Erfindung ist mehrfach verwendbar, so daß sich die Entwicklungs- und Baukosten auf mehrere Missionen verteilen. Aufgrund seiner geringen Strukturmasse im Verhältnis zur aufzunehmenden Nutzlastmasse liegen die Kosten pro Start vergleichsweise niedrig. Seine geringe Größe macht die Mitnahme auf verschiedenen Raumtransportern möglich und er ist sowohl durch einen Roboterarm als auch durch Astronauten manövrierbar. Insgesamt ermöglicht die durch den erfindungsgemäßen Nutzlastträger gegebene Vervielfachung der Standardnahtstelle somit eine nahezu beliebige Erweiterung durch einfaches Aufstecken weiterer derartiger Strukturen.

Nachfolgend wird die Erfindung anhand von in der Zeichnung dargestellten Ausführungsbeispielen näher erläutert werden. Es zeigen
- Fig. 1: eine perspektivische Darstellung eines Teils einer Raumstation mit montierten Nutzlastträgern,
- Fig. 2: eine Detaildarstellung der in Fig. 1 eingesetzten Nutzlastträger und
- Fig. 3: eine seitliche Ansicht einer weiteren aus einer Raumstation und einem Nutzlastträger bestehenden Anordnung.

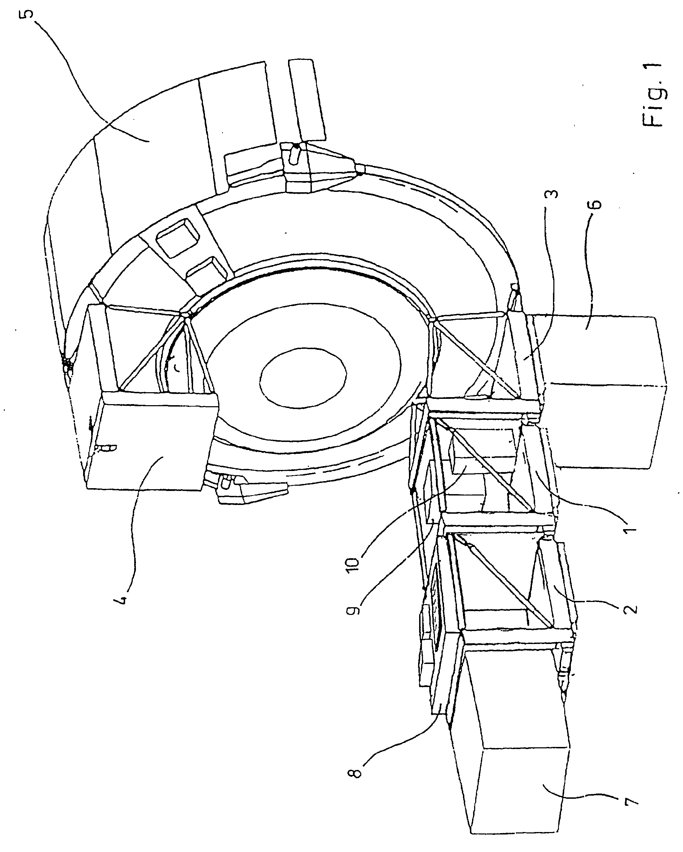

Bei der in Fig. 1 gezeigten Anordnung sind zwei Module 1, 2 an einer von zwei externen Aufnahmeeinheiten 3, 4 für Nutzlasten montiert. Die Aufnahmeeinheiten 3, 4 sind Teil einer Raumstation 5, in diesem Fall des COLUMBUS-Labors der internationale Raumstation ISS. Die Module 1, 2 sind ihrerseits mit diversen Nutzlasten 6 und 7 und die Aufnahmeeinheit 3 mit einer Nutzlast 8 ausgestattet. Ferner trägt das Modul 1 Zusatzgeräte 9 für die Stromversorgung sowie einen Nutzlastrechner 10, beide sind im Inneren eines Moduls 1 als Nutzlastträger angeordnet.

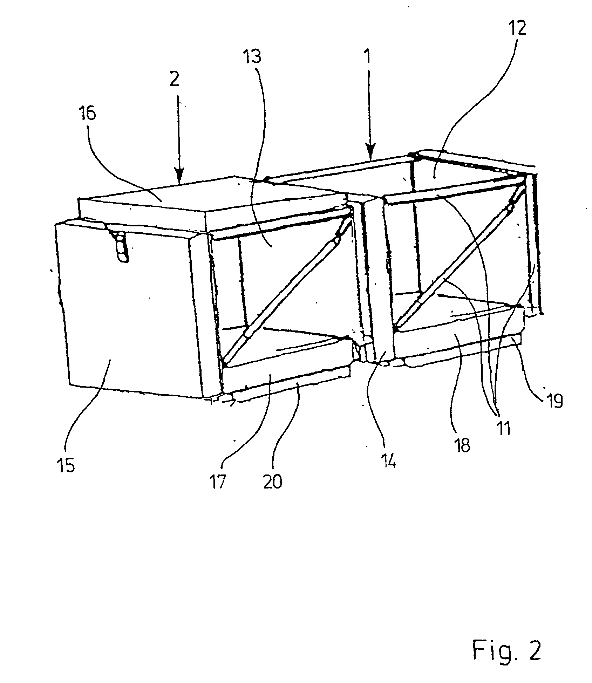

Wie in Fig. 2 im Detail dargestellt, wird jedes Modul 1, 2 von einer im wesentlichen rechtwinkligen Gitterstruktur 11 gebildet, die ihrerseits aus kohlenstoffaserverstärktem Kunststoff oder einem Metall, vorzugsweise Aluminium oder Titan, besteht. Breite und Höhe der Nutzlastträger 1, 2 entsprechen mindestens den Abmessungen der zugeordneten Aufnahmeeinheiten 3, 4 an der Raumstation 5.

Diese Aufnahmeeinheiten 3, 4 sind mit Versorgungsanschlüssen für Energie und Datenübertragung versehen und bilden damit die Nahtstellen für den Anschluß der Module 1, 2, wobei jeweils eine der Außenflächen 12, 13 der Module 1, 2 mit einem zu dieser Nahtstelle passenden Kopplungselement ausgestattet ist. Eine, bzw. im Fall des Moduls 2 zwei weitere Außenflächen 14 bzw. 15, 16 sind entsprechend den Aufnahmeeinheiten 3, 4 ausgebildet und mit identischen Versorgungsanschlüssen versehen. Auf diese Weise können sie als Nahtstelle für den Anschluß weiterer Module oder sogenannter aktiver Nutzlasten dienen. Auf weiteren Außenflächen 17, 18 der Module 1, 2 sind Montage-Lochplatten 19, 20 montiert, die keine derartigen Versorgungsanschlüsse aufweisen und der Aufnahme sogenannter passiver Nutzlasten dienen.

Der Innenraum der Module 1, 2 ist frei zugänglich und bietet Stauraum für die Aufnahme von Geräten.

Die Module 1, 2 können bei Bedarf mit externen Stützstreben versehen werden, die diese während des Starts im Laderaum des Raumtransporters fixieren. Diese Stützstreben verbleiben bei Entnahme der Module 1, 2 im Laderaum.

Zum Transfer im Orbit verfügen die Module 1, 2 weiterhin über Handgriffe sowie einen Angriffspunkt für einen Roboterarm.

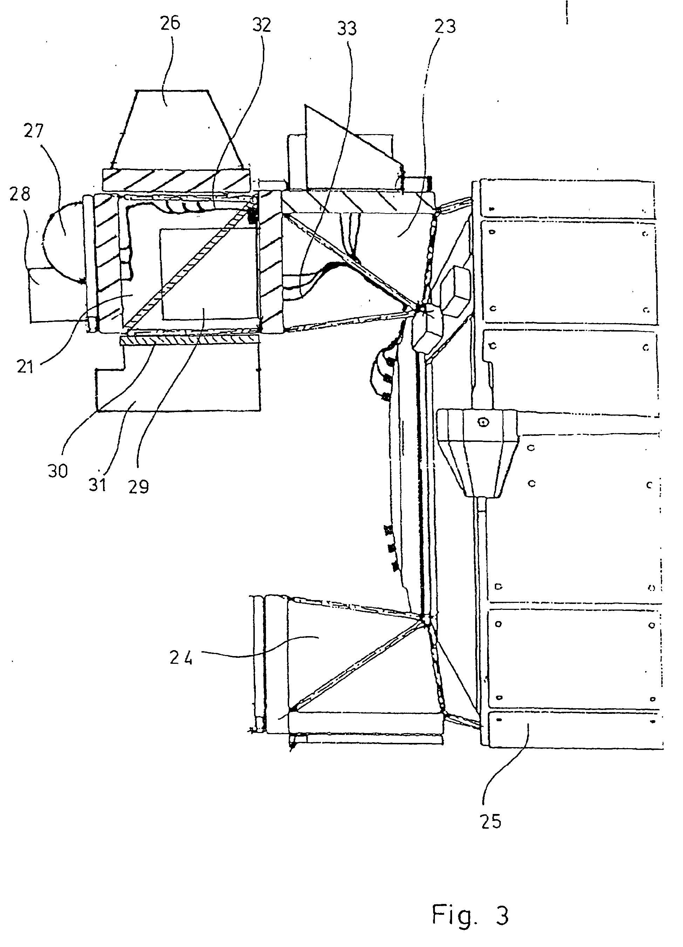

Fig. 3 zeigt in einer der Darstellung gemäß Fig. 1 vergleichbaren Anordnung ein weiteres Modul 21, der an einer von zwei externen Aufnahmeeinheiten 23, 24 für Nutzlasten, sogenannten External Payload Facilities, eines COLUMBUS-Moduls 25 als Bestandteil der internationalen Raumstation ISS montiert ist. Das Modul 21 ist im Fall des hier dargestellten Ausführungsbeispiels mit insgesamt vier aktiven Nutzlasten 26 bis 29 versehen. Drei davon sind an entsprechenden Aufnahmeeinheiten extern auf der Ober- bzw. seiner Stirnseite dieses Moduls 21 angebracht, die vierte aktive Nutzlast 29 befindet sich in seinem Inneren, wo identische versorgungsanschlüsse vorhanden sind. Schließlich ist auf einer an der Unterseite des Moduls 21 angebrachten Montage-Lochplatte 30 eine extern montierte passive Nutzlast 31 angeordnet.

Ein Kabelbaum 32 verbindet Versorgungsleitungen 33 aus der Raumstation 25 mit den entsprechenden Versorgungssteckern am bzw. im Inneren des Moduls 21. Ferner stellt im Bedarfsfall eine Stromverteilungseinheit fernbedienbare Sicherungen, Schalter, Sensoren usw. für die Nutzlasten zur Verfügung. Ein ebenfalls im Bedarfsfall vorzusehender Nutzlastrechner ermöglicht die Kontrolle und/oder Steuerung der auf dem Modul installierten Nutzlasten über entsprechende verbindungsleitungen.

Nach der Auswahl derjenigen Nutzlasten, die gemeinsam auf einem Modul gestartet werden sollen, und der Auswahl des entsprechenden Transportgerätes erfolgt die Installation der benötigten Aufnahmeeinheiten und/oder Montageplatten an den jeweils gewünschten Seiten der Gitterstruktur der Nutzlastträger. Bei Bedarf werden Zusatzgeräte installiert und mit den versorgungsanschlüsse verbunden. Anschließend erfolgt ein Test aller Verbindungen und die Installation der Module in der Ladebucht des Raumtransporters. Nach erfolgtem Start und Erreichen des vorgesehenen Orbits wird das Modul aus der Ladebucht des Raumtransporters entnommen und per Roboterarm oder durch Astronauten zur vorgesehenen Nahtstelle befördert. Dort wird das Modul auf die vorgesehen. Aufnahmeeinheit aufgesteckt und seine Versorgung aktiviert. Je nach der Art der durchzuführenden Mission werden anschließend weitere Module an den ersten angeschlossen und/oder es erfolgt gegebenenfalls eine Utnkonfiguration der Nutzlasten. Nach Beendigung der Mission und der Abnahme von der Raumstation wird das Modul zur Erde zurücktransportiert, wo die Nutzlasten demontiert und auf ihre mögliche Wiederverwendbarkeit hin überprüft werden.

## Patentansprüche

1. Nutzlastträger für Raumstationen (5) in Form eines auf eine mit Versorgungsanschlüssen versehene und als Nahtstelle dienende externe Aufnahmeeinheit (3,4) der Raumstation (5) aufsetzbaren, austauschbaren und ergänzbaren Moduls (1,2), der eine offene Gitterstruktur (11) aufweist und mit einer ersten, als Anschlußpunkt an die Raumstation (5) ausgebildeten Außenfläche (12) versehen ist, wobei diese erste Außenfläche (12) des Moduls (1) ein zur Aufnahmeeinheit (3, 4) korrespondierendes Kopplungselement aufweist und wenigstens eine weitere Außenfläche (14 bzw. 8) der Gitterstruktur (11) als Anschlußpunkt ausgebildet ist, **dadurch gekennzeichnet, daß** die zumindest eine weitere Außenfläche sowohl als Nahtstelle für den Anschluß weiterer Nutzlastträger als auch für den Anschluß sogenannten aktiven Nutzlasten drenbar ist.

2. Nutzlastträger nach Anspruch 1, **dadurch gekennzeichnet, daß** wenigstens eine Außenfläche (14,15) des Moduls (1,2) eine mit Versorgungsanschlüssen versehene Nahtstelle bildet.

3. Nutzlastträger nach Anspruch 1 oder 2, **dadurch gekennzeichnet, daß** die Versorgungsanschlüsse mit Leitungen für die Übertragung von Energie und Daten ausgestattet sind.

4. Nutzlastträger nach einem der Anspruche 1 bis 3, **dadurch gekennzeichnet, daß** die versorgungsanschlüsse auch im Inneren der Gitterstruktur (11) der angekoppelten Module (1,2) vorgesehen sind.

5. Nutzlastträger nach einem der Ansprüche 1, bis 4, **dadurch gekennzeichnet, daß** wenigstens eine Außenfläche der gekoppelten Module (1,2) als Montageplatte (19,20) ausgebildet ist.

## Claims

1. Payload carrier for space stations (5) in the form of an exchangeable and supplementable module (1, 2) that can be mounted on an external receiving unit (3, 4) of the space station (5), the receiving unit being provided with supply connections and serving as a link, which module has an open grid structure (11) and is provided with a first external surface (12) formed as a connection point to the space station (5), this first external surface (12) of the module (1) having a coupling element corresponding to the receiving unit (3, 4) and at least one further external surface (14 and 8 respectively) of the grid structure (11) being formed as a connection point, **characterized in that** the at least one further external surface can serve both as a link for the connection of further payload carriers and for the connection of so-called active payloads.

2. Payload carrier according to claim 1, **characterized in that** at least one external surface (14, 15) of the module (1, 2) forms a link provided with supply connections.

3. Payload carrier according to claim 1 or 2, **characterized in that** the supply connections are equipped with lines for the transfer of energy and data.

4. Payload carrier according to one of claims 1 to 3, **characterized in that** the supply connections are also provided in the interior of the grid structure (11) of the attached modules (1, 2).

5. Payload carrier according to one of claims 1 to 4, **characterized in that** at least one external surface of the coupled modules (1, 2) is formed as a mounting plate (19, 20).

## Revendications

1. Porteur de charge utile pour stations spatiales (5) sous la forme d'un module (1, 2) démontable, échangeable et parachevable sur une unité de réception externe (3, 4) de la station spatiale (5), unité de réception pourvue de raccords d'alimentation et servant d'interface, ledit module présentant une structure en réseau ouverte (11) et étant munie d'une première face externe (12) formant un point de raccordement avec la station spatiale (5), dans lequel cette première face externe (12) du module (1) présente un élément de couplage correspondant à l'unité de réception (3, 4) et au moins une autre face externe (14 ou 8) de la structure en réseau (11) est conformée en point de raccordement, **caractérisé en ce que** la au moins une face externe est utilisable autant comme interface pour le raccordement d'autres porteurs de charge utile que pour le raccordement de ce que l'on appelle des charges utiles actives.

2. Porteur de charge utile selon la revendication 1, **caractérisé en ce qu'**au moins une face externe (14, 15) du module (1, 2) forme une interface pourvue de raccords d'alimentation.

3. Porteur de charge utile selon la revendication 1 ou 2, **caractérisé en ce que** les raccords d'alimentation sont équipés de lignes pour la transmission d'énergie et de données.

4. Porteur de charge utile selon l'une quelconque des revendications 1 à 3, **caractérisé en ce que** les raccords d'alimentation sont également prévus à l'intérieur de la structure en réseau (11) des modules couplés (1, 2).

5. Porteur de charge utile selon l'une quelconque des revendications 1 à 4, **caractérisé en ce qu'**au moins une face externe des modules couplés (1, 2) se présente sous la forme d'une plaque de montage (19, 20).
